# EUROPEAN PATENT APPLICATION

(11) **EP 4 586 278 A1**
(43) Date of publication of application: **16.07.2025**
(21) Application number: 24216492.9
(22) Date of filing: 29.11.2024
(51) Int. Cl.: G21C 17/00, G01N 29/14, G21C 17/10, G21D 3/00, G21D 3/04

(54) **NUCLEAR POWER PLANT DIAGNOSTICS**

(30) Priority: 11.01.2024 US 202418410943
(71) Applicant: Rolls-Royce Corporation, Indianapolis, IN 46225-1103 (US); Rolls-Royce North American Technologies Inc., Indianapolis IN 46241 (US)
(72) Inventor: NELSON, Scott, Indianapolis, IN 46225-1103 (US); LAGOW, Benjamin W., Indianapolis, IN 46225-1103 (US); GOLD, Matthew R., Indianapolis, IN 46241 (US); BLAIR, Taylor K., Indianapolis, IN 46225-1103 (US)
(74) Representative: Ström & Gulliksson AB

(57) **Abstract**

An example system includes at least one acoustic sensor configured to generate at least one time-dependent acoustic data signal indicative of an acoustic signal generated by an nuclear power plant performing a process possessing a plurality of process attributes, and a computing device including an acoustic data signal processing module configured to receive the at least one time-dependent acoustic data signal, and transform the at least one time-dependent acoustic data signal to a frequency-domain spectrum, wherein each process attribute of the plurality of process attributes is associated with at least one respective frequency band, and a correlation module configured to determine a process attribute of the plurality of process attributes by identifying at least one characteristic of the frequency-domain spectrum.

## Description

### TECHNICAL FIELD

The disclosure relates to nuclear power plants.

### BACKGROUND

Nuclear power plants are used in a wide variety of applications to generate power. For example, nuclear fuel may react to generate heat, which may generate steam. The steam may be expanded across a turbine to generate rotational power, which may be used to drive an electrical generator or other load.

### SUMMARY

In some examples, the disclosure describes a system that includes at least one acoustic sensor configured to generate at least one time-dependent acoustic data signal indicative of an acoustic signal generated by a nuclear power plant performing a process possessing a plurality of process attributes; and a computing device comprising: an acoustic data signal processing module configured to: receive the at least one time-dependent acoustic data signal; and transform the at least one time-dependent acoustic data signal to a frequency-domain spectrum, wherein each process attribute of the plurality of process attributes is associated with at least one respective frequency band; and a correlation module configured to determine a process attribute of the plurality of process attributes by identifying at least one characteristic of the frequency-domain spectrum.

In some examples, the disclosure describes a method that includes receiving, by a computing device, from at least one acoustic sensor, at least one time-dependent acoustic data signal indicative of an acoustic signal generated by a nuclear power plant performing a process possessing a plurality of process attributes; transforming, by the computing device, the at least one time-dependent acoustic data signal to a frequency-domain spectrum, wherein each process attribute of the plurality of process attributes is associated with at least one respective frequency band; and determining, by the computing device, a process attribute of the plurality of process attributes by identifying at least one characteristic of the frequency-domain spectrum.

In some examples, the disclosure describes a computer readable storage medium comprising instructions that, when executed, cause at least one processor to: receive, from at least one acoustic sensor, at least one time-dependent acoustic data signal indicative of an acoustic signal generated by a nuclear power plant performing a process possessing a plurality of process attributes; transform the at least one time-dependent acoustic data signal to a frequency-domain spectrum, wherein each process attribute of the plurality of process attributes is associated with at least one respective frequency band; and determine a process attribute of the plurality of process attributes by identifying at least one characteristic of the frequency-domain spectrum.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a conceptual diagram illustrating an example nuclear power plant, in accordance with one or more aspects of this disclosure
FIG. 2 is a conceptual block diagram illustrating an example of a computing device for analyzing an acoustic signal generated by a nuclear power plant performing a process possessing a plurality of process attributes to determine a process attribute of the plurality of process attributes.
FIG. 3 is a flow diagram illustrating an example technique for analyzing an acoustic signal generated by a nuclear power plant performing a process possessing a plurality of process attributes to determine a process attribute of the plurality of process attributes.

### DETAILED DESCRIPTION

The disclosure describes systems and techniques for analyzing an acoustic signal generated by a nuclear power plant to determine one or more attributes of the power generation process. The nuclear power plant may include several system components, such as fuel rod components, pipes, valves, actuators, heat exchangers, pumps, and the like.

During a nuclear power generation process, fuel in fuel rods may react to generate heat. A primary fluid circulating in proximity to the fuel rods may absorb the heat and, via a primary fluidic loop, travel to a heat exchanger where the heat may be transferred to a secondary fluid. For instance, where the second fluid is water, the transfer of heat into the secondary fluid may cause the water to change phase into steam. The secondary fluid may, via a secondary fluidic loop, travel to and impart force on a turbine. For instance, the steam may expand across blades of the turbine.

Reaction of the fuel may generate radiation. In general, it may be desirable for a nuclear power plant to confine the radiation to as small an area as possible. For instance, use of the aforementioned primary and secondary loops may help keep the radiation confined and avoid turning the heavily irradiated fluid of the primary loop into steam. Other components of nuclear power plants that provide radiation confinement include, but are not limited to, reactor vessels (e.g., a "shell" that contains the reactor), various shielding components, walls, containment buildings, and the like. Such radiation confinement may result in areas of the nuclear power plant having different radiation levels. Most areas may have radiation levels below a threshold radiation level (e.g., a level at which operation of some electronic components may be degraded). However, some areas may have radiation levels above the threshold radiation level, such as portions of a reactor vessel or a containment vessel.

It may also be desirable for operators of a nuclear power plant to have visibility into process attributes of the reactor and/or other components. For instance, it may be desirable for the operators to be able to measure process parameters a temperature, a pressure, a viscosity, a mass flow rate, a volumetric flow rate, and/or a geometry of a flowstream of fluid. Similarly, it may be desirable for the operators to be able to determine a process deviation such as a flow blockage or a fluid leakage, as well as process deviation resulting from incompatibility, wear, or blockage of a component of the nuclear power plant. However, it may not be possible to use traditional sensors to monitor these process attributes. For instance, certain sensors may not operate well in such irradiated/high temperature environments. Similarly, it may not be possible for operators to physically access various components directly.

In accordance with one or more aspects of this disclosure, a nuclear power plant may include one more acoustic sensors (e.g., microphones) that may generate acoustic data indicative of an acoustic signal generated by a nuclear power plant performing a process possessing a plurality of process attributes. Example processes performed by the nuclear power plant include, but are not limited to, power generation, material handling, and spent fuel monitoring. A computing device may process the acoustic data to determine a process attribute of the nuclear power plant. The acoustic sensors may provide benefits as compared to other sensing modalities. For instance, as the acoustic sensors may not rely on physical interaction with fluids (e.g., which may be radioactive or thermally hot), the acoustic sensors may enable monitoring of process attributes that were not previously monitorable and/or may reduce a cost of monitoring process attributes.

As noted above, the acoustic sensors may generate acoustic data indicative of an acoustic signal generated by a nuclear power plant performing a process possessing a plurality of process attributes. For example, the flow of fluid (e.g., via the primary or secondary fluidic loop) may generate a unique acoustic signature based on many variables, including pressure, viscosity, mass flow rate, and geometry. When one of these variables changes during operation, a unique change is generated in the acoustic signature picked up by the acoustic sensors. This change in acoustic signature may be monitored to record time-based information about changes in the operating variables of the reactor system.

The monitored process attributes may be used for any of a variety of purposes. As one example, operations of the nuclear power plant may be controlled (e.g., automatically or by an operator) based on the process attributes monitored via the acoustic sensor(s). For instance, the process attributes monitored via the acoustic sensor(s) may be used for feedback control. As another example, the process attributes monitored via the acoustic sensor(s) may be used for longer term health monitoring (e.g., to determine when and if components need maintenance/replacement)

After a fuel rod has been expended, it may be removed from a main reactor and transferred to a spent fuel pool for a cooldown period. During its time in the spent fuel pool, a fuel rod may still emit some heat and radiation. As such, it may be desirable to monitor the fuel rods in the spent fuel pool. In some examples, in addition to or in place of being positioned within active power generation areas of a nuclear power plant (e.g., reactor vessel), one or more acoustic sensors may be positioned proximate to a spent fuel pool. The acoustic sensor may generate an acoustic data signal indicative of process attributes of the spent fuel pool. These attributes may include, but are not limited to, temperatures, pressures, component failures (e.g., fuel rod cracks, faults in fuel red handling machinery), and the like. As disclosed herein, a computing device may monitor the acoustic data signal to determine the process attributes.

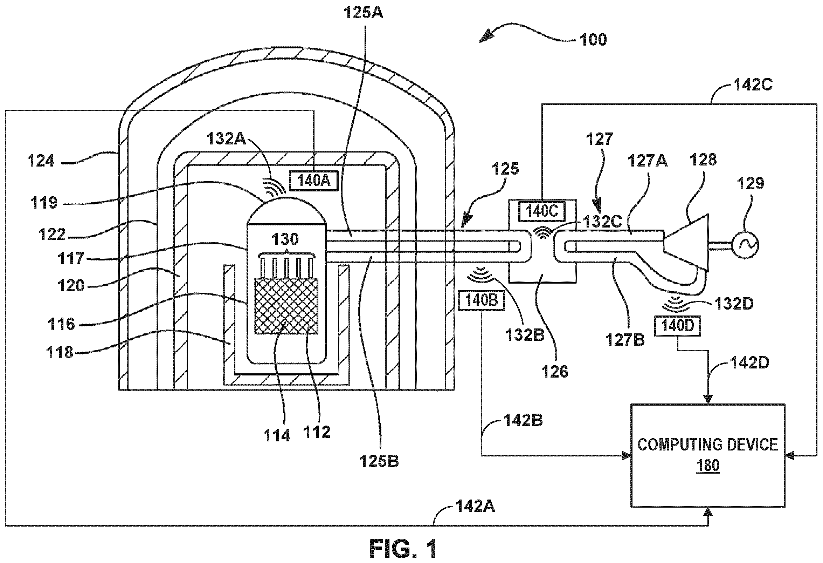

FIG. 1 is a conceptual diagram illustrating an example nuclear power plant, in accordance with one or more aspects of this disclosure. Nuclear power plant 100 may represent any type of nuclear power plant, including those for terrestrial electrical power generation, non-terrestrial (e.g., space) power generation, naval electrical and/or propulsive power generation, and the like.

As shown in FIG. 1, nuclear power plant 100 may include nuclear reactor 112 (e.g., a boiling water reactor (BWR), a gas-cooled reactor (GCR), a pressurized water reactor (PWR), a pressurized heavy water reactor (PHWR), or any other type of reactor), reactor vessel 116 surrounding the nuclear reactor 112 and a primary shield 118 surrounding the reactor vessel 116. Nuclear reactor 112 comprises reactor fuel elements 114. A further wall 120 may surround the primary shield 118, containment vessel 122 may surround further wall 120 and building wall 124 may surround the containment vessel 122. Primary shield 118 may at least form a ring around the reactor vessel 116. Reactor vessel 116 may include main portion 117 and lid 119. Nuclear power plant 100 includes primary circuit 125, heat exchanger 126, secondary circuit 127, turbine 128 and electrical generator 129. Primary circuit 125 and secondary circuit 127 (e.g., fluid circuits) may respectively contain a primary fluid and a secondary fluid. In some examples, both the primary fluid and the secondary fluid may be water. Control rods 130 may be controlled by actuators to move in an out of nuclear reactor 112 to control reactivity. Furthermore, nuclear reactor 112 may include a gantry or other material handling equipment that inserts and removes fuel elements 114.

In operation, fuel element 114 may generate heat, which may heat primary fluid in primary circuit 125. The primary fluid flows through pipe 125A from nuclear reactor 112 to heat exchanger 126. In some examples, primary circuit 125 may include a pump that circulates the primary fluid within primary circuit 125. Within heat exchanger 126, the primary fluid may heat the secondary fluid in the secondary circuit 127 (e.g., where the secondary fluid is water, the heating of the secondary fluid may transition the secondary fluid into steam). Upon exiting heat exchanger 126, the primary fluid in the primary circuit 125 may flow through pipe 125B back to the nuclear reactor 112. The heated secondary fluid in the secondary circuit 127 may flow through the pipe 127A to turbine 128. The heated secondary fluid may be expanded across turbine 128 to generate rotational mechanical energy. The generated rotational mechanical energy may drive a load, such as electrical generator 129 to generate electricity.

In accordance with one or more aspects of this disclosure, nuclear power plant 100 may include acoustic monitoring. For instance, as shown in FIG. 1, nuclear power plant 100 may include one or more acoustic sensors 140A-140D (collectively, "acoustic sensors 140") and computing device 180. In operation, various components of nuclear power plant 100 may emit sounds. For example, the flow of fluid (e.g., via the primary or secondary fluidic loop) may generate a unique acoustic signature based on many variables, including pressure, viscosity, mass flow rate, and geometry.

Various components and streams of nuclear power plant 100 may be acoustically monitored. For example, nuclear power plant 100 includes at least one or more acoustic sensors 140A-140D (collectively, "acoustic sensors 140") and computing device 180. In some examples, as shown in FIG. 1, nuclear power plant 100 includes a plurality of acoustic sensors, such as at least two acoustic sensors 140. Each of the at least one acoustic sensor 140 is configured to sense a respective acoustic signal (e.g., sound) of acoustic signals 132A-132D (collectively, "acoustic signals 132"). Acoustic signals 132 may be generated by one or more components or processes of nuclear power plant 100.

As shown in FIG. 1, acoustic sensors 140 may be positioned at various positions within nuclear power plant 100. As one example, acoustic sensor 140A may be positioned proximate to reactor vessel 116 and may generate acoustic data that represents acoustic signal 132A, which may be sounds emitted by nuclear reactor 112, fuel elements 114, and/or control rods 130. As another example, acoustic sensor 140B may be positioned proximate to primary circuit 125 and may generate acoustic data that represents acoustic signal 132B, which may be sounds emitted by primary circuit 125 (e.g., by fluid flowing within primary circuit 125). As another example, acoustic sensor 140C may be positioned proximate to heat exchanger 126 and may generate acoustic data that represents acoustic signal 132C, which may be sounds emitted by heat exchanger 126 (e.g., by fluid flowing within heat exchanger 126). As another example, acoustic sensor 140D may be positioned proximate to secondary circuit 127 and may generate acoustic data that represents acoustic signal 132D, which may be sounds emitted by secondary circuit 127 (e.g., by fluid flowing within secondary circuit 127).

In some examples, one or more of acoustic sensors 140 may be in direct contact with a source of a sound to be monitored. In some examples, as acoustic sensors 140 may not be in direct contact with the source of the sound to be monitored. For instance, acoustic sensor 140A may monitor fuel elements 114 without being in contact with the same. As such, aspects of this disclosure may provide for cheaper and/or safer alternatives to other monitoring techniques.

Each of acoustic sensors 140 may include, for example, an acoustic sensing element such as a microphone or a sound-to-electric transducer or electromagnetic, capacitive, or piezoelectric elements that generate an electrical signal in response to incident sound waves. Each of acoustic sensors 140 may be configured to sense a respective acoustic signal of acoustic signals 132 with a predetermined wavelength or wavelength range. In some examples, acoustic sensors 140 may be configured to sense acoustic signals 132 that may or may not be detectable by human hearing, including infrasound and ultrasound. In some examples, acoustic signals 132 may include frequencies below about 20Hz, from about 20 Hz to about 20 kHz, from about 20 kHz to about 2MHz, higher than about 2 MHz, or combinations thereof. Each acoustic sensor of acoustic sensors 140 may configured to generate a respective time-dependent acoustic data signal of at least one time-dependent acoustic data signal 142 based on the sensed acoustic signal 132 and communicate at least one time-dependent acoustic data signal 142 to computing device 180. In some examples, at least one time-dependent acoustic data signal 142 includes a digital data signal, and at least one acoustic sensor 140 includes an analog-to-digital converter. In other examples, at least one time-dependent acoustic data signal 142 may include an analog signal. In some examples, at least one acoustic sensor 140 may include an amplifier to amplify the signal sensed by at least one acoustic sensor 140 and produce the at least one time-dependent acoustic data signal 142. At least one acoustic sensor 140 may transmit at least one time-dependent acoustic data signal 142 using electrical signals, Bluetooth, Wi-Fi, radio, or any other suitable transmission pathway.

Computing device 180 may be configured to control operation of one or more components of nuclear power plant 100 automatically or under control of a user. For example, computing device 180 may be configured to control operation of one or more of reactor 112, fuel rods 130, primary circuit 125 (e.g., valves therein), heat exchanger 126, secondary circuit 127 (e.g., valves therein), turbine 128, and electrical generator 129.

Computing device 180 also may be configured to receive at least one time-dependent acoustic data signal 142 from at least one acoustic sensor 140 and analyze the at least one time-dependent acoustic data signal 142 to determine one or more process attributes of nuclear power plant 100.

As described above, components of nuclear power plant 100 and processes performed by nuclear power plant system 100 generate acoustic signals 132 during various processes. For example, acoustic signals 132 may originate from reactor 112, control rods 130, primary circuit 125, secondary circuit 127, or any other component associated with nuclear power plant 100, such as a material handling robot or machine, a pressure relief system, an emergency cooling system, an air handling system, a dust filtering system, or the like.

Acoustic signals 132 generated by the components depend on process attributes, and may change in response to process attributes changing. For example, acoustic signals 132B produced by primary circuit 125 may change in response to any one or more of the temperature, pressure, flowrate, viscosity, composition, or concentration of the flowstream in primary circuit 125 changing. Similarly, acoustic signals 132D produced by secondary circuit 127 may change in response to any one or more of the temperature, pressure, flowrate, viscosity, composition, or concentration of the fluid in secondary circuit 127 changing.

In some examples, respective process attributes may be associated with one or more respective frequency bands within acoustic signals 132. Other process attributes may similarly be associated with respective frequencies or frequency bands, which may change in frequency value, intensity, or the like, based on the value of the process attribute.

As discussed above, during a power generation process, primary fluid may be heated by reactivity of fuel elements 114. This heating of primary fluid may generate sounds, which may form at least a portion of acoustic signal 132A that may be detected by acoustic sensor 140A. As discussed above, acoustic sensor 140A may generate acoustic data signal 142A, which may be processed by computing device 180. In normal operation, the primary fluid may be heated without turning into steam. However, if fuel elements 114 become too hot, some of the primary fluid may turn into steam as it transits reactor 112. The sound emitted when the primary fluid is merely heated versus the sounds emitted when some of the primary fluid is heated to the point of turning into steam may having different characteristics (e.g., a different peak frequency). These characteristics may be present in the acoustic data signal 142A generated by acoustic sensor 140A and processed by computing device 180. As such, computing device 180 may be able to determine whether or not steam is being formed, or how much steam is being formed, within reactor 112 via acoustic analysis. In this way, aspects of this disclosure may improve remote monitoring of reactor 112 / fuel elements 114.

In addition to monitoring potential phase transitions within reactor 112, the acoustic monitoring techniques of this disclosure may be similarly applicable to monitoring phase transitions at other portions of nuclear power plant 100. For instance, as shown in FIG. 1, acoustic sensor 140C may be used to monitor phase transitions (e.g., steam generation, coolant evaporation, and/or condensation) in heat exchanger 126.

As discussed above, during the power generation process, actuators may move control rods 130 in and out of reactor 112 (e.g., to control reactivity). In some examples, operation of the actuators may be controlled by computing device 180. While computing device 180 may control the actuators using an "open loop" system in which computing device 180 outputs commands to the actuators without verifying compliance, it may be desirable for computing device 180 to determine whether or not the actuators are in compliance with commands. When an actuator operates, it may generate sound. The sound generated by a properly operating actuator may be different than the sound generated by a jammed or otherwise faulty actuator. These characteristics may be present in the acoustic data signal 142A generated by acoustic sensor 140A and processed by computing device 180. As such, computing device 180 may be able to determine whether or not an actuator of a control rod of control rods 130 is faulty via acoustic analysis. In this way, aspects of this disclosure may improve monitoring of reactor 112. Furthermore, in some examples, a single acoustic sensor may monitor a plurality of actuators of control rods 130.

In some examples, acoustic signals 132 may be affected by the portion of the process which is being performed. For example, acoustic signals 132 generated during an initial startup period of power generation by components of nuclear power plant 100 may differ from acoustic signals 132 generated when nuclear power plant 100 is performing a steady state power generation process, or acoustic signals 132 generated when the power generation process of nuclear power plant 100 is being shut down. Hence, computing device 180 may analyze at least one time-dependent acoustic data signal 142 to determine at which portion of the power generation process nuclear power plant 100 is operating, and compare this to the portion of the power generation process nuclear power plant 100 is configured to be operating.

In some examples, at least one acoustic sensor 140 may be configured to enhance detection of one or more acoustic signal of acoustic signals 132 compared to another one or more acoustic signal of acoustic signals 132. For instance, a first acoustic sensor of at least one acoustic sensor 140 may be positioned adjacent to a selected component of nuclear power plant 100, oriented toward a selected component of nuclear power plant 100, or the like to enhance detection of a selected acoustic signal of acoustic signals 132 compared to another one or more acoustic signal of acoustic signals 132. For example, a first acoustic sensor of at least one acoustic sensor 140 may be positioned to sense acoustic signals 132A originating from reactor 112, and a second acoustic sensor of at least one acoustic sensor 140 may be positioned to sense acoustic signals 132B originating from primary circuit 125. Each of acoustic sensors 140 may be located near a component or at a zone within the nuclear power plant 100, or may be oriented towards a component to sense sound from the component, or otherwise more accurately attribute the sound to a source. In an example, one or more of acoustic sensors 140 may include multiple acoustic sensors forming an acoustic sensor network that captures sound generated by various components of nuclear power plant 100.

In some examples, one or more of acoustic sensors 140 may be statically positioned within nuclear power plant 100. For instance, one or more of acoustic sensors 140 may be affixed to a wall, beam, ceiling, pipe, stand, etc. In some examples, one of more of acoustic sensors 140 may be movably positioned around nuclear power plant 100. For instance, one or more of acoustic sensors 140 may be attached to a self-propelled platform (e.g., a land drone, or an airborne drone) that may move around nuclear power plant 100 to position its carried acoustic sensor(s) at different locations. This platform may be radiation hardened such that it may be used to dynamically deploy acoustic sensors at locations not safely reachable by human operators. Such an arrangement may be particularly beneficial in emergency situations where monitoring of components via other means may be compromised.

As described above, computing device 180 may analyze at least one time-dependent acoustic data signal 142 to determine information about one or more process attributes of nuclear power plant 100, which may include, for example, a component configuration, component wear or blockage, process parameters, or process deviations of nuclear power plant 100. For example, computing device 180 may be configured to receive the at least one time-dependent acoustic data signal 142, transform the at least one time-dependent acoustic data signal 142 to a frequency-domain spectrum, and determine a process attribute by identifying at least one characteristic of the frequency-domain spectrum. As described above, each of the plurality of process attributes of nuclear power plant 100 may be associated with at least one respective frequency band. In some examples, computing device 180 may analyze at least one time-dependent acoustic data signal 142 to determine whether process attributes associated with the process performed by nuclear power plant 100 are within a nominal or expected range, or if the process attributes are varying compared to the nominal or expected range.

In some examples, because of the different positions of at least one acoustic sensor 140, computing device 180 may analyze the at least time-dependent acoustic data signal 132 to determine information related to particular components of nuclear power plant 100. For example, computing device 180 may utilize the intensity of respective frequency components of at least one time-dependent acoustic data signal 142 to determine a distance from the acoustic sensor from which the at least one time-dependent acoustic data signal 142 was received to the component generating the acoustic signal, and may attribute the acoustic signal to that component. Additionally or alternatively, computing device 180 may utilize data indicative of the position and/or orientation of the acoustic sensor from which the at least one time-dependent acoustic data signal 142 was received relative to a selected component to the acoustic signal to a component. In this way, computing device 180 may analyze the at least one time-dependent acoustic data signal 142 or multiple time-dependent acoustic data signals to determine process attributes for a plurality of components of the nuclear power plant.

In some examples, computing device 180 may analyze at least one acoustic data signal 142 to identify process attributes, including process parameters, component wear or blockage, or both that may result in unsatisfactory operation of nuclear power plant 100. In some examples, by utilizing at least one time-dependent acoustic data signal 142, computing device 180 may perform real-time or near-real-time analysis of the operation of nuclear power plant 100. For example, monitoring a signal representative of one or more outputs of nuclear power plant 100 may provide a more accurate indication of process attributes of nuclear power plant 100, e.g., compared to monitoring inputs to nuclear power plant 100 using a flow meter, flow controller, amp meter, or voltmeter. Similarly, such acoustic monitoring may provide for redundant monitoring of inputs collected using flow meter, flow controller, amp meter, or voltmeter. For instance, as the acoustic monitoring system described herein uses a wholly different approach to monitoring, the acoustic monitoring system may provide an additional mode of monitoring, thereby decreasing the risk of concurrent sensor failures and increasing the possibility of detecting a critical system failure.

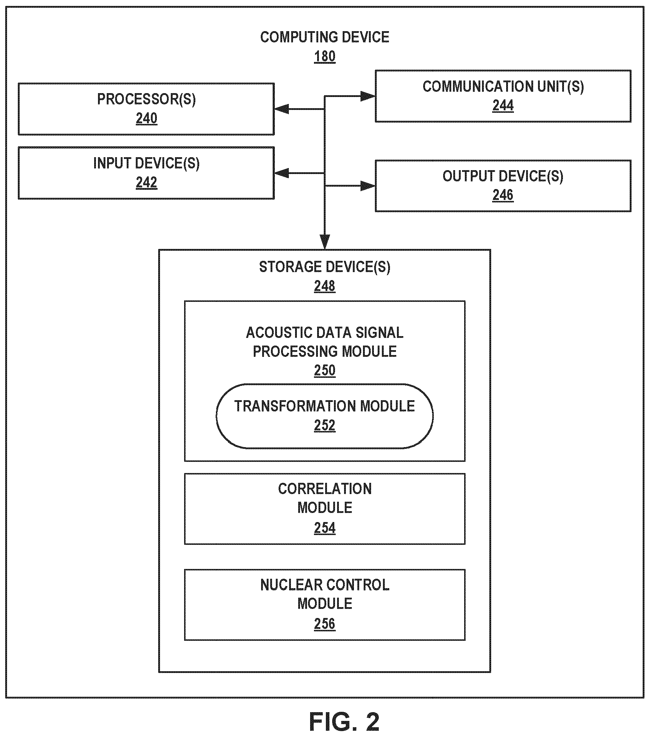

FIG. 2 is a conceptual block diagram illustrating an example of computing device 180 illustrated in FIG. 1. In some examples, computing device 180 may include, for example, a desktop computer, a laptop computer, a workstation, a server, a mainframe, a cloud computing system, or the like. In some examples, computing device 180 controls the operation of nuclear power plant 100, including, for example, reactor 112, control rods 130, primary circuit 125, heat exchanger 126, secondary circuit 127, turbine 128, and electrical generator 129.

In the example illustrated in FIG. 2, computing device 180 includes one or more processors 240, one or more input devices 242, one or more communication units 244, one or more output devices 246, and one or more storage devices 248. In some examples, one or more storage devices 248 stores acoustic data signal processing module 250, transformation module 252, correlation module 254, or nuclear control module 256. In other examples, computing device 180 may include additional components or fewer components than those illustrated in FIG. 2.

One or more processors 240 are configured to implement functionality and/or process instructions for execution within computing device 180. For example, processors 240 may be capable of processing instructions stored by storage device 248. Examples of one or more processors 40 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 248 may be configured to store information within computing device 180 during operation. Storage devices 248, in some examples, include a computer-readable storage medium or computer-readable storage device. In some examples, storage devices 248 include a temporary memory, meaning that a primary purpose of storage device 248 is not long-term storage. Storage devices 248, in some examples, include a volatile memory, meaning that storage device 248 does not maintain stored contents when power is not provided to storage device 248. Examples of volatile memories include random access memories (RAM), dynamic random access memories (DRAM), static random access memories (SRAM), and other forms of volatile memories known in the art. In some examples, storage devices 248 are used to store program instructions for execution by processors 240. Storage devices 248, in some examples, are used by software or applications running on computing device 180 to temporarily store information during program execution.

In some examples, storage devices 248 may further include one or more storage device 248 configured for longer-term storage of information. In some examples, storage devices 248 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 180 further includes one or more communication units 244. Computing device 180 may utilize communication units 244 to communicate with external devices via one or more networks, such as one or more wired or wireless networks. Communication unit 244 may include a network interface card, such as an Ethernet card, an optical transceiver, a radio frequency transceiver, or any other type of device that can send and receive information. Other examples of such network interfaces may include WiFi radios or Universal Serial Bus (USB). In some examples, computing device 180 utilizes communication units 244 to wirelessly communicate with an external device such as a server.

Computing device 180 also includes one or more input devices 242. Input devices 242, in some examples, are configured to receive input from a user through tactile, audio, or video sources. Examples of input devices 242 include a mouse, a keyboard, a voice responsive system, video camera, microphone, touchscreen, or any other type of device for detecting a command from a user.

Computing device 180 may further include one or more output devices 246. Output devices 246, in some examples, are configured to provide output to a user using audio or video media. For example, output devices 246 may include a display, a sound card, a video graphics adapter card, or any other type of device for converting a signal into an appropriate form understandable to humans or machines. In some example, computing device 180 outputs a representation of one or more of the at least one time-dependent acoustic data signal 142, of the frequency-domain spectrum, of the at least one characteristic of the frequency-domain spectrum, or of the process attribute that the at least one characteristic is indicative of, via output devices 246.

In some examples, computing device 180 may generate an alert in response to the least one attribute, via output devices 246. For example, computing device 180 may generate auditory signals, such as a beep, an alert tone, or an alerting sound, or visual signals, such as an icon on a display, flashing lights, or a combination of visual and audible signals, to indicate a process attribute variance or a process attribute deviation. In some examples, the alert signal may indicate a particular component in need of maintenance or replacement, for example, a valve of a fluid loop, a control rod actuator, or another component. In some examples, an operator may thus be alerted, and may choose to investigate nuclear power plant 100. As another example, computing device 180 may generate an alert that is transmitted over a network to another computing device, including a hand-held computing device, for instance, a cellphone. The alert signal may include information about the process attribute, for instance, a process parameter, or a variance in the process parameter, or a process deviation status, or an identification of the process deviation.

Computing device 180 also may include an acoustic data signal processing module 250 and a correlation module 254. In some examples, acoustic data signal processing module 250 pre-processes or processes at least one time-dependent acoustic data signal 142 to prepare at least one time-dependent acoustic data signal 142 for analysis by correlation module 254, and correlation module 254 analyzes at least one time-dependent acoustic data 142 signal to determine the process attribute. In some examples, acoustic data signal processing module 250 may include a transformation module 252 for transforming at least one time-dependent acoustic data signal 142 from a time-domain spectrum to a frequency-domain spectrum. Functions performed by acoustic data signal processing module 250, transformation module 252 and correlation module 254 are explained below with reference to the example flow diagram illustrated in FIG. 4.

Acoustic data signal processing module 250, transformation module 252, and correlation module 254 may be implemented in various ways. For example, acoustic data signal processing module 250, transformation module 252, and/or correlation module 254 may be implemented as software, such as an executable application or an operating system, or firmware executed by one or more processors 240. In other examples, acoustic data signal processing module 250, transformation module 252, and/or correlation module 254 may be implemented as part of a hardware unit of computing device 180. In some examples, acoustic data signal processing module 250 includes transformation module 252, as shown in FIG. 2. In some examples, transformation module 252 is separate from acoustic data signal processing module 250.

Computing device 180 also may include nuclear control module 256. Nuclear control module 256 may be configured to, based on predetermined product specifications, control one or more components of nuclear power plant 100 to perform one of the aforementioned processes, such as power generation. For example, nuclear control module 256 may send a control signal to one or more components, or receive a signal from one or more sensors. In some examples, the control signal controls at least one pump configured to cause flow of fluid or material to or through circuits 125, 127, as well as manipulation of control rods 130.

Computing device 180 may include additional components that, for clarity, are not shown in FIG. 2. For example, computing device 180 may include a power supply to provide power to the components of computing device 180. Similarly, the components of computing device 180 shown in FIG. 2 may not be necessary in every example of computing device 180.

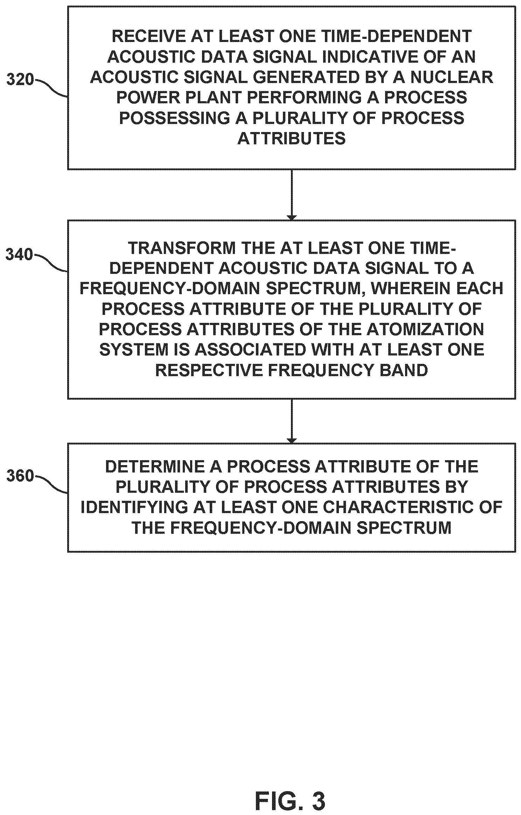

FIG. 3 is a flow diagram illustrating an example technique for analyzing an acoustic signal generated by a nuclear power plant performing a process possessing a plurality of process attributes to determine a process attribute of the plurality of process attributes. In some examples, a computing device, such as computing device 180, may implement the technique of FIG. 3 to analyze the at least one time-dependent signal 142 indicative of acoustic signals 132 generated by nuclear power plant 100 performing a process possessing a plurality of process attributes, described in various examples with reference to FIG. 1 above, to determine a process attribute of the plurality of process attributes. The technique of FIG. 3 will be described with reference to nuclear power plant 100 of FIG. 1, and computing device 180 of FIGS. 1 and 2, for purposes of description only. It will be appreciated that the technique of FIG. 3 may be used to analyze at least one acoustic data signal to determine a process attribute of processes performed by other nuclear power plants, that other computing devices may implement the technique of FIG. 3, or both.

The technique of FIG. 3 includes receiving, by computing device 180, from at least one acoustic sensor 140, at least one time-dependent acoustic data signal 142 indicative of acoustic signals 132 generated by nuclear power plant 100 (320). In some examples, at least one time-dependent acoustic data signal 142 may include analog signals, and acoustic data signal processing module 250 of computing device 180 may process at least one acoustic data signal 142 by performing an analog-to-digital conversion. In other examples, the received at least one time-dependent acoustic data signal 142 may include digital signals and acoustic data signal processing module 250 may not perform analog-to-digital conversion of at least one time-dependent acoustic data signal 142. In some examples, acoustic data signal processing module 250 of computing device 180 may filter at least one acoustic data signal 142 through signal processing filters such as band pass filters, high pass filters, low pass filters, comb filters, notch filters, or other filters, for instance, deconvolution filters, or noise filters to filter out undesirable signal components, such as noise, superfluous signal components, such as harmonics, or to reduce or compress the information in at least one acoustic data signal 142.

The technique of FIG. 3 also includes transforming, by transformation module 252 of computing device 180, at least one time-dependent acoustic data signal 142 to a frequency-domain spectrum (340). The frequency-domain spectrum may include intensity or amplitude as a function of frequency. In some examples, transformation module 252 of computing device 180 transforms at least one time-dependent acoustic data signal 142 to a frequency-domain spectrum using at least one of a fast Fourier transform or a discrete Fourier transform. In some examples, transformation module 252 may perform the transformation before, during or after other processing such as filtering described above.

The technique of FIG. 3 further includes determining, by correlation module 254 of computing device 180, a process attribute of the plurality of process attributes by identifying at least one characteristic of the frequency-domain spectrum (360). As described above, in some examples, each process attribute of the plurality of process attributes is associated with at least one respective frequency band in the frequency-domain spectrum. For example, normal flow of fluid through reactor 112 may be associated with a first frequency band, and abnormal flow of fluid (e.g., undesirable steam generation) through reactor 112 may be associated with a second frequency band. Other examples are also contemplated, for example, those described with respect to FIG. 1. Therefore, correlation module 254 may determine the process attribute based at least in part on the identified at least characteristic of the frequency-domain spectrum according to one or more example techniques described below.

Computing device 180 may identify at least one characteristic of the frequency-domain spectrum using one or more of the example techniques described below. In some examples, correlation module 254 may analyze the entire frequency-domain spectrum to identify at least one characteristic of the frequency-domain spectrum (360). For example, correlation module 254 may compare the entire frequency-domain spectrum with a second frequency-domain spectrum to identify at least one characteristic of the frequency-domain spectrum (360). In some examples, the second frequency-domain spectrum may be a known or reference frequency-domain spectrum, such as sample frequency-domain spectrum obtained from another known nuclear power plant performing a known nuclear power generation process or a calculated frequency-domain spectrum. In this way, correlation module 254 may compare the entire frequency-domain spectrum to a frequency-domain spectrum representative of expected operation of nuclear power plant 100.

In other examples, the second frequency-domain spectrum may be a past frequency-domain spectrum obtained from at least one time-dependent acoustic data signal 142 over a past interval of time from nuclear power plant 100. The second frequency-domain spectrum may include, for example, a past frequency-domain spectrum obtained during the process, so that correlation module 254 compares the frequency-domain spectrum at a present interval of time with the frequency-domain spectrum at a past interval of time to identify the at least one characteristic. In this way, correlation module 254 may identify changes of the frequency-domain spectrum relative to past operation of nuclear power plant 100 and may determine changes over time of operation of nuclear power plant 100.

In some examples, correlation module 254 may then determine the process attribute by at least selecting at least one of a representative frequency or a representative intensity of the frequency within the frequency-domain spectrum as the at least one characteristic based on the comparison of the entire frequency-domain spectrum with the known frequency-domain spectrum (360). For example, correlation module 254 may identify at least one frequency for which an intensity has changed between the second frequency-domain spectrum and the frequency-domain spectrum determined based on at least one time-dependent acoustic data signal 142, and may select that frequency as the process attribute or for use in determining the process attribute. In some examples, correlation module 254 may identify a plurality of respective frequencies for which a respective intensity has changed between the second frequency-domain spectrum and the frequency-domain spectrum determined based on at least one time-dependent acoustic data signal 142, and may select each respective frequency as a process attribute or for use in determining a respective process attribute. In this way, in some examples, correlation module 254 may determine a plurality of process attributes for nuclear power plant 100 based at least in part on at least one time-dependent acoustic data signal 142.

In other examples, instead of analyzing the entire frequency-domain spectrum, correlation module 254 may analyze a selected portion of the frequency-domain spectrum to identify at least one characteristic of the frequency-domain spectrum (360). For example, identifying at least one characteristic of the frequency-domain spectrum (360) may include filtering, by acoustic data signal processing module 250, the at least one time-dependent acoustic data signal 142 to select a frequency band prior to transforming, by transformation module 252, at least one time-dependent acoustic data signal 142 to the frequency-domain spectrum (340), or selecting, by acoustic data signal processing module 250, a frequency band from the frequency-domain spectrum. In some examples, identifying the at least one characteristic of the frequency-domain spectrum (360) may further include analyzing, by correlation module 254, the selected frequency band to identify at least one characteristic of the frequency-domain spectrum (360). In some examples, correlation module 254 may compare the selected frequency band with a second frequency band, which may be analogous to the second frequency-domain spectrum described above. For example, the second frequency band may be a known or reference frequency-domain spectrum or may be a past frequency-domain spectrum obtained from at least one time-dependent acoustic data signal 142.

In some examples, determining the process attribute may include selecting, by correlation module 254, at least one of a frequency or an intensity of the frequency within the selected frequency band as the at least one characteristic based on the comparison of the selected frequency band with the known frequency band (360). For example, correlation module 254 may extract a plurality of intensities from a selected frequency band of the frequency-domain spectrum, each intensity of the plurality of intensities corresponding to a respective frequency of a plurality of frequencies within the selected frequency band. In some examples, correlation module 254 may select at least one of an intensity of the plurality of intensities or the respective frequency of the plurality of frequencies as the at least one characteristic. In some examples, correlation module 254 may identify the maximum intensity of the plurality of intensities and select at least one of the maximum intensity (for instance, peak intensity) or the frequency associated with the maximum intensity (for instance, peak frequency) as the at least one characteristic.

In some examples, after determining the at least one characteristic of the frequency-domain spectrum, correlation module 254 may compare the at least one characteristic with a characteristic value or range of characteristic values to determine the process attribute (360). The at least one characteristic and the known or expected characteristic value or range of characteristic values may relate to aspects of process attributes (e.g., magnitude, variation, or the like), which may be associated with frequency values within a frequency band, may be associated with intensities of one or more frequencies within a frequency band, or both. For example, the magnitude of a process attribute may be related to the magnitude of intensities of at least one frequency within the respective frequency band associated with the process attribute, and changes in the process attribute may result in changes in the respective frequency band associated with the process attribute. In some of these examples, increases or decreases in the magnitude of a process attribute may result in corresponding increases or decreases in intensities of one or more frequencies within the respective frequency band associated with the process attribute. Alternatively or additionally, the occurrence of a phenomenon within nuclear power plant 100 may result in a change in the peak frequency, peak intensity, or both, exhibited by the respective frequency band associated with the process attribute responsible for the occurrence of the phenomenon. Therefore, correlation module 254 may compare the compare the at least one characteristic with a known or expected characteristic value or range of characteristic values to determine the process attribute.

Correlation module 254 may compare the at least one characteristic with a known or expected characteristic value or range of characteristic values to determine the process attribute using one or more of the following example techniques. In some examples, correlation module 254 may select the known or expected characteristic value or range of characteristic values from a second frequency-domain spectrum, such as a known frequency-domain spectrum obtained from a test or experimental process or a frequency-domain spectrum from a past time interval of the present process. In some examples, the known frequency-domain spectrum may include a frequency-domain spectrum obtained from a nuclear power generation process that resulted in satisfactory/nominal operation. In other examples, the known frequency-domain spectrum may be a reference frequency-domain spectrum that includes expected or nominal frequency content based on expected or nominal process attributes. Thus, comparing the at least one characteristic with known or expected characteristic value or range of characteristic values may allow correlation module 254 to determine the deviation or variation of a process attribute of the present process from the process attribute of a known process.

Comparing the at least one characteristic with a characteristic value or range of characteristic values obtained from the frequency-domain spectrum over a past time interval (360) may allow correlation module 254 to determine the change in the process attribute from the past time interval to the present time interval. In some examples, correlation module 254 may determine an increase or decrease in the intensity of a frequency in a selected frequency band compared to an intensity in the past frequency-domain spectrum as indicative of a respective increase or decrease in the magnitude of a process attribute associated with the selected frequency band.

In some examples, correlation module 254 identifies the at least one characteristic at a first interval of time, and compares it with a known characteristic value that is a value of the at least one characteristic at a second interval of time. In some examples, the first interval of time may be a present or recent interval of time, and the second interval of time may be a past interval of time. In some examples, the first interval of time may be associated with a known system performance, for instance, a known magnitude of a process attribute, and the second interval of time may be associated with an unknown system performance, for instance, an unknown magnitude of a process attribute. In some examples, correlation module 254 identifies the at least one characteristic at the first interval of time, and compares the at least one characteristic with a known or predetermined characteristic value or known or predetermined characteristic value range. In some examples, the at least one characteristic at the first interval of time includes at least one of an average intensity of the frequency-domain spectrum, a peak intensity of the frequency-domain spectrum, a selected frequency of the frequency-domain spectrum, or a frequency associated with a peak intensity of the frequency-domain spectrum and the predetermined characteristic value range includes a range of the corresponding characteristic.

In these ways, correlation module 254 may determine at least one process attribute of the plurality of process attributes. In some examples, nuclear power plant 100 may perform a process possessing a plurality of process attributes. In some examples, identifying the magnitude of a process attribute may be desirable. Correlation module 254 may determine the process attribute, for instance, a process parameter that may include at least one of a temperature, a pressure, a viscosity, a mass flow rate, a volumetric flow rate, a geometry of a flowstream flowing through nuclear power plant 100, for instance, of fluid flowing through reactor 112, primary circuit 125, and/or secondary circuit 127 based at least in part on at least one time-dependent acoustic signal 142.

In some examples, nuclear power plant 100 may exhibit unsatisfactory performance for an unknown reason that may be related to a process deviation. Computing device 180 may analyze at least one time-dependent acoustic data signal 142 by one or more example techniques described above with reference to FIG. 3 to determine the process deviation. In some examples, the process deviation may include at least one of material handling fluctuation, for instance, of fuel rods; flow blockage (for e.g., of one or more of primary circuit 125 and secondary loop circuit); fluid (gas or liquid) leakage; a process deviation resulting from incompatibility (for e.g., control rod mis-installed); or wear or blockage of the at least one component, which may include at least one of wear or blockage of actuators of control rods 130.

In this way, computing device 180 may perform the examples techniques described above with reference to FIG. 4 to analyze at least one time-dependent acoustic data signal 142 to determine process attributes for a plurality of components of nuclear power plant 100 performing a process (e.g., power generation), and determine whether process attributes are within a nominal or expected range, or if the process attributes are varying compared to an expected value.

The techniques described in this disclosure may be implemented, at least in part, in hardware, software, firmware, or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in this disclosure may also be embodied or encoded in a computer system-readable medium, such as a computer system-readable storage medium, containing instructions. Instructions embedded or encoded in a computer system-readable medium, including a computer system-readable storage medium, may cause one or more programmable processors, or other processors, to implement one or more of the techniques described herein, such as when instructions included or encoded in the computer system-readable medium are executed by the one or more processors. Computer system readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer system readable media. In some examples, an article of manufacture may comprise one or more computer system-readable storage media.

Various examples have been described. These and other examples are within the scope of the following claims.

## Claims

1. A method comprising:
receiving, by a computing device, from at least one acoustic sensor, at least one time-dependent acoustic data signal indicative of an acoustic signal generated by a nuclear power plant performing a process possessing a plurality of process attributes;
transforming, by the computing device, the at least one time-dependent acoustic data signal to a frequency-domain spectrum, wherein each process attribute of the plurality of process attributes is associated with at least one respective frequency band; and
determining, by the computing device, a process attribute of the plurality of process attributes by identifying at least one characteristic of the frequency-domain spectrum.

2. The method of claim 1, wherein the process attribute of the plurality of process attributes comprises at least one of:
a process parameter comprising at least one of a temperature, a pressure, a viscosity, a mass flow rate, a volumetric flow rate, a geometry of a flowstream; or
a process deviation status comprising at least one of material handling fluctuation, flow blockage, fluid leakage, or a process deviation resulting from incompatibility, wear, or blockage of a system component of the nuclear power plant.

3. The method of claim 2, wherein the system component comprises at least one of an actuator, a valve, a heat exchanger, or a pump.

4. The method of claim 1, further comprising:
outputting a representation of at least one of the at least one time-dependent acoustic data signal, the frequency-domain spectrum, the at least one characteristic of the frequency-domain spectrum, or the process attribute of which the at least one characteristic is indicative.

5. The method of claim 1, wherein the process comprises one or more of:
power generation;
material handling; and
spent fuel monitoring.

6. The method of claim 1, wherein the at least one acoustic sensor is positioned within an area of the nuclear power plant having a radiation level that is greater than a threshold radiation level.

7. The method of claim 6, wherein the at least one acoustic sensor is positioned within a reactor vessel or a containment vessel of the nuclear power plant.

8. The method of claim 1, wherein the acoustic signal is generated by a system component of the nuclear power plant, and wherein the at least one acoustic sensor is not in physical contact with the system component.

9. The method of claim 8, wherein the system component comprises a fuel rod component.

10. The method of claim 8, wherein the system component comprises a fluid circuit.

11. The method of claim 6, wherein the at least one acoustic sensor is positioned proximate to a spent fuel pool of the nuclear power plant.

12. The method of claim 6, wherein the at least one acoustic sensor is attached to a self-propelled platform.

13. The method of claim 12, wherein the self-propelled platform comprises an airborne drone.

14. A system comprising:
at least one acoustic sensor configured to generate at least one time-dependent acoustic data signal indicative of an acoustic signal generated by a nuclear power plant performing a process possessing a plurality of process attributes; and
a computing device configured to perform the method of any of claims 1-12.

15. A computer readable storage medium comprising instructions that, when executed, cause at least one processor to:
receive, from at least one acoustic sensor, at least one time-dependent acoustic data signal indicative of an acoustic signal generated by a nuclear power plant performing a process possessing a plurality of process attributes;
transform the at least one time-dependent acoustic data signal to a frequency-domain spectrum, wherein each process attribute of the plurality of process attributes is associated with at least one respective frequency band; and
determine a process attribute of the plurality of process attributes by identifying at least one characteristic of the frequency-domain spectrum.
